# EUROPEAN PATENT SPECIFICATION

(11) **EP 1 058 874 B1**
(45) Date of publication and mention of the grant of the patent: **01.08.2007**
(21) Application number: 99904035.5
(22) Date of filing: 07.01.1999
(51) Int. Cl.: G06F 1/16

(54) **SYSTEM AND METHOD FOR RECEIVING WIRELESS INFORMATION ON A MOBILE DEVICE**
SYSTEM UND VERFAHREN ZUM EMPFANG VON DRAHTLOSER INFORMATION AN EINER MOBILEN VORRICHTUNG
SYSTEME ET PROCEDE PERMETTANT DE RECEVOIR DES INFORMATIONS RADIO SUR UN DISPOSITIF MOBILE

(30) Priority: 07.01.1998 US 70720 P; 13.02.1998 US 75123 P; 30.06.1998 US 107724; 10.11.1998 US 189024
(43) Date of publication of application: 13.12.2000
(73) Proprietor: MICROSOFT CORPORATION, Redmond, Washington 98052-6399 (US)
(72) Inventor: WECKER, Dave, Bothell, WA 98021 (US); MILLER, John, M., Kirkland, WA 98034 (US); O'LEARY, Michael, J., Redmond, WA 98052 (US); TUNIMAN, David, Redmond, WA 98053 (US); DEO, Vinay, Bellevue, WA 98008 (US)
(74) Representative: McLeish, Nicholas Alistair Maxwell
(86) International application number: PCT/US1999/000306
(87) International publication number: WO 1999/035557

(56) References cited:
- EP-A- 0 434 231
- EP-A- 0 704 827
- WO-A-90/13213
- OLIVERIO G: "A Paging HPC" HANDHELD SYSTEMS, CREATIVE DIGITAL PUBLISHING INC. ,RETRIEVED FROM THE INTERNET: 10-06-1999, no. 5.4, July 1997 - August 1997, XP002106345 http://www.cdpubs.com/hhsys/archives/54/08 oliver.pdf
- SCARDINA M: "The PageCard SDK" HANHELD SYSTEMS, CREATIVE DIGITAL PUBLISHING INC., RETRIEVED FROM THE INTERNET: 10-06-1999, no. 5.6, November 1997 - December 1997, XP002106346 http://www.cdpubs.com/hhsys/archives/56/08 scardi.pdf

## Description

### BACKGROUND OF THE INVENTION

The present invention relates to personal mobile computing devices commonly known as handheld portable computers. More particularly, the present invention relates to a system and method for receiving wireless information on a mobile device.

Mobile devices are small electronic computing devices often referred to as personal digital assistants. Many of such mobile devices are handheld devices, or palm-size devices, which comfortably fit within the hand. One commercially available mobile device is sold under the trade name HandHeld PC (or H/PC) having software provided by Microsoft Corporation of Redmond, Washington.

Generally, the mobile device includes a processor, random access memory (RAM), and an input device such as a keyboard and a display, wherein the keyboard can be integrated with the display, such as a touch sensitive display. A communication interface is optionally provided and is commonly used to communicate with a desktop computer. A replaceable or rechargeable battery powers the mobile device. Optionally, the mobile device can receive power from an external power source that overrides or recharges the built-in battery, such as a suitable AC or DC adapter, or a powered docking cradle.

In one common application, the mobile device is used in conjunction with the desktop computer. For example, the user of the mobile device may also have access to, and use, a desktop computer at work or at home. The user typically runs the same types of applications on both the desktop computer and on the mobile device. Thus, it is quite advantageous for the mobile device to be designed to be coupled to the desktop computer to exchange information with, and share information with, the mobile device.

Another technique for providing information to the mobile device is described in the above-identified co-pending U.S. patent applications. Generally, the method and system described therein allow the mobile device to receive information over a wireless, low bit-rate channel or transport, such as a pager network. For example, such information can include electronic mail or news, weather, sports, traffic and local event information typically obtained from a desktop computer connected to the Internet.

However, the limited battery power available on the mobile device can present significant obstacles in transferring information using the wireless low bit-rate channel. For example, the mobile device should be able to receive information over the wireless transport at any time. However, if the mobile device was merely left on, awaiting information to be received, the battery for the mobile device would be quickly depleted. This method of operation would require the user to constantly recharge or replace the battery.

Alternatively, a wireless receiver on the mobile device can turn on the mobile device when it detects that information is being sent to the mobile device. However, if large amounts of information are being transmitted over the wireless transport, the wireless receiver can turn on the mobile device so often that again the battery for the mobile device can Be quickly depleted.

Another drawback of most wireless receivers for a mobile device is that the wireless receiver requires its own battery, separate from the battery used on the mobile device since the mobile device can be turned off at any time. This increases the size, weight and cost of the wireless receiver as well as complicates use for the user since he must maintain both batteries.

There is a continuing need to improve wireless communication with a mobile device. In particular, there is a need to efficiently process information transmitted over a wireless channel to the mobile device in order to conserve battery resources on the mobile device.

An article by G. Oliverio entitled "A Paging HPC" published in the July/August 1997 issue of Handheld Systems by Creative Digital Publishing Inc. proposes combining a conventional paging receiver, a FLEX chipset and a portable computer to enable the portable computer to receive data over a wireless paging network. The FLEX chipset wakes the PDA processor whenever an incoming message is received and stored in the FLEX SPI buffer.

EP 0 434 231 A2 also discloses a paging receiver in combination with a portable computer. Again, the PDA processor is awoken whenever a message is received by the paging receiver. WO 90/13213 also discloses a paging receiver in combination with a portable computer.

### SUMMARY OF THE INVENTION

The invention provides a method for receiving wireless information on a portable computing device as set out in Claim 1, and a corresponding combination of a wireless receiver and a portable computing device as set out in claim 17.

In embodiments of the invention a wireless receiver is powered only from a battery of the portable computing device. Wireless information is received and stored in memory of the wireless receiver. The wireless receiver wakes up a processor of the portable computing device when the wireless information fills a threshold of the memory available in the wireless receiver. The wireless information is then transferred from the memory of the wireless receiver to the memory of the portable computing device.

The wireless receiver includes a radio receiver for receiving wireless information, memory for storing the wireless information and a processor for analyzing the wireless information. The radio receiver, the memory and the processor are powered only from the portable computing device.

Embodiments of the present invention also include a method for receiving wireless information on a portable computing device, wherein the wireless information is transmitted to the portable computing device with respect to wireless addresses. The method includes providing a list of wireless addresses on the portable computing device. Each wireless address corresponds to selected information to be received. Each wireless address also includes an associated status entry indicating enablement of the wireless address. The method further includes selectively enabling and disabling the status entry for the wireless address to allow receipt of the corresponding information as a function of an operating parameter of the device. In one exemplary embodiment, the operating parameter indicates when the portable computing device is being powered or connected to an external source such as a power docking cradle.

### BRIEF DESCRIPTION OF THE DRAWINGS

FIG. 1 is a simplified block diagram illustrating one embodiment of a mobile device in accordance with the present invention.
FIG. 2 is a more detailed block diagram of one embodiment of the mobile device shown in FIG. 1.
FIG. 3 is a simplified pictorial illustration of one embodiment of the mobile device in accordance with the present invention.
FIG. 4 is a simplified pictorial illustration of another embodiment of the mobile device in accordance with the present invention.
FIG. 5 is a simplified schematic illustration of a wireless receiver in accordance with the present invention.
FIG. 6 is a flow chart illustrating a method of operation for the wireless receiver and the mobile device.
FIG. 7 illustrates a detailed flow chart illustrating operation of the wireless receiver and the mobile device.
FIG. 8 is a pictorial representation of a list of wireless addresses.

### DETAILED DESCRIPTION OF THE PREFERRED EMBODIMENTS

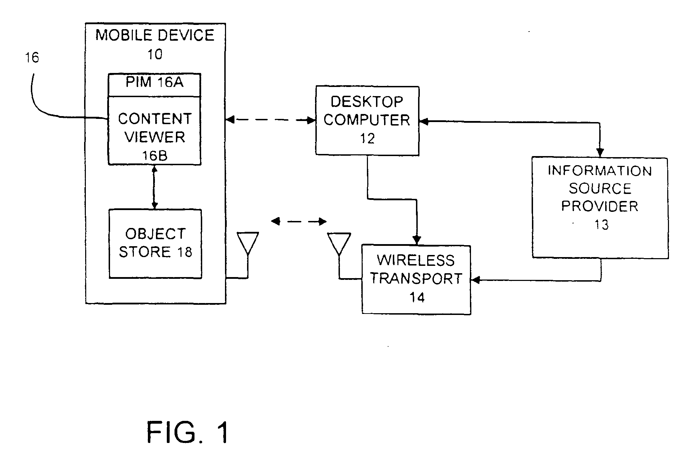

FIG. 1 is a block diagram of an exemplary portable computing device, herein a mobile device 10 in accordance with the present invention. FIG. 1 illustrates that, in one preferred embodiment, the mobile device 10 is suitable for connection with, and to receive information from, a desktop computer 12, a wireless transport 14, or both. The wireless transport 14 can be a paging network, cellular digital packet data (CDPD), FM-sideband, or other suitable wireless communications. However, it should also be noted that the mobile device 10 may not be equipped to be connected to the desktop computer 12, and the present invention applies regardless of whether the mobile device 10 is provided with this capability.

In any case, the mobile device 10 preferably includes one or more application programs 16 and an object store 18. The application programs 16 can be, for example, a personal information manager (PIM) 16A that stores objects related to a user's electronic mail (e-mail) and scheduling or calendaring information. The application programs 16 can also include a content viewer 16B that is used to view information obtained from a wide-area network (WAN), such as the Internet. In one embodiment, the content viewer 16B is an "offline" viewer in that information is stored primarily before viewing, wherein the user does not interact with the source of information in real time. However, it should be understood that the present invention can be implemented in a real time environment wherein the wireless transport 14 provides two-way communication.

The wireless transport 14 is used to send information to the mobile device 10 for storage in the object store 18 and for use by the application programs 16. The wireless transport 14 receives the information to be sent from an information source provider 13, which, for example, can be a source of news, weather, sports, traffic or local event information. Likewise, the information source provider 13 can receive e-mail and/or scheduling information from the desktop computer 12 to be transmitted to the mobile device 10 through the wireless transport 14. The information from the desktop computer 12 can be supplied to the information source provider 13 through any suitable communication link, such as a direct modem connection. In another embodiment, the desktop computer 12 and the information source provider 13 can be connected together forming a local area network (LAN) or a wide area network (WAN). Such networking environments are commonplace in offices, enterprise-wide computer network Intranets and the Internet. If desired, the desktop computer 12 can also be directly connected to the wireless transport 14.

The object store 18 is preferably configured to store a plurality of individual records or objects, each comprising a plurality of fields or properties related to features of PIM 16A, or to data viewable on the content viewer 16B. For example, where PIM 16A is an e-mail and scheduling program, object store 18 is configured to store objects, each of which has a plurality of properties which can be associated with e-mail, scheduling or calendaring features provided by PIM 16A.

It is also worth noting that, in one embodiment, the mobile device 10 can be coupled to the desktop computer 12 using any suitable, and commercially available, communication link and using a suitable communications protocol. For instance, in one embodiment, the mobile device 10 communicates with the desktop computer 12 with a physical cable which communicates using a serial communications protocol. Other communication mechanisms include infra-red (IR) communication and direct modem communication.

It is also worth noting that the mobile device 10, in one embodiment, can be synchronized with the desktop computer 12. In that instance, properties of objects stored in object store 18 are similar to properties of other instances of the same objects stored in the object store 18 on the desktop computer 12 or on the mobile device 14. Thus, for example, when one instance of an object stored in the object store 18 on the desktop computer 12, the second instance of that object in the object store 18 of the mobile device 10 is updated the next time the mobile device 10 is connected to the desktop computer 12 so that both instances of the same object contain up-to-date data. This is commonly referred to as synchronization.

In order to accomplish synchronization, synchronization components run on both the mobile device 10 and the desktop computer 12. The synchronization components communicate with one another through well defined interfaces to manage communication and synchronization.

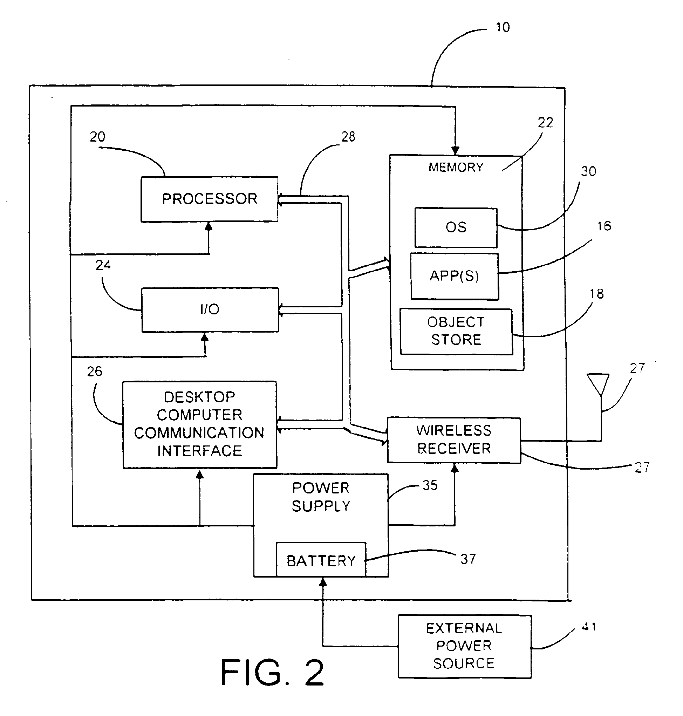

FIG. 2 is a more detailed block diagram of the mobile device 10. The mobile device 10 includes a processor 20, memory 22, input/output (I/O) components 24, a desktop computer communication interface 26 and a wireless receiver 27. In a preferred embodiment, these components of the mobile device 10 are coupled for communication with one another over a suitable bus 28.

Memory 22 is preferably implemented as nonvolatile electronic memory such as random access memory (RAM) with a battery back-up module (not shown) such that information stored in memory 22 is not lost when the general power to the mobile device 10 is shut down. A portion of memory 22 is preferably allocated as addressable memory for program execution, while the remaining portion of memory 22 is preferably used for storage, such as to simulate storage on a disk drive.

Memory 22 includes an operating system 30, the application programs 16 (such as PIM 16A discussed with respect to FIG. 1), as well as the object store 18. During operation, the operating system 30 is preferably loaded into, and executed by, the processor 20 from memory 22. The operating system 30, in one preferred embodiment, is a "WINDOWS CE" brand operating system commercially available from Microsoft Corporation. The operating system 30 is preferably designed for mobile devices, and implements features which can be utilized by PIM 16A and content viewer 16B through a set of exposed application programming interfaces and methods. The objects in object store 18 are preferably maintained by PIM 16A, content viewer 16B and the operating system 30, at least partially in response to calls to the exposed application programming interfaces and methods.

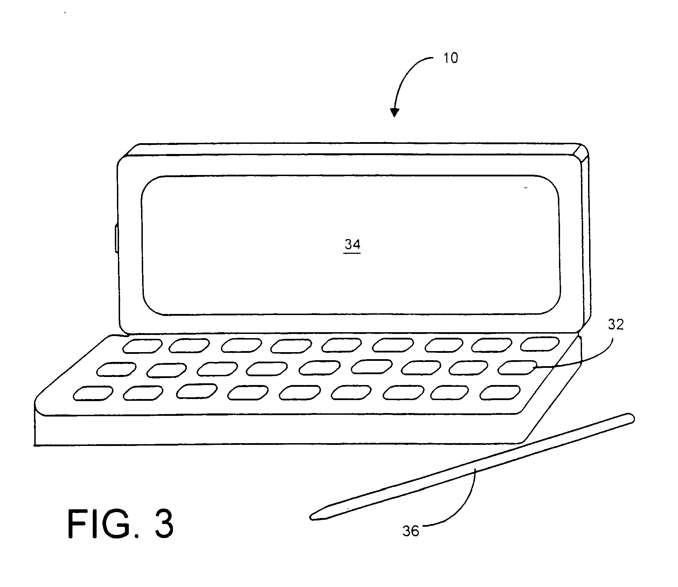

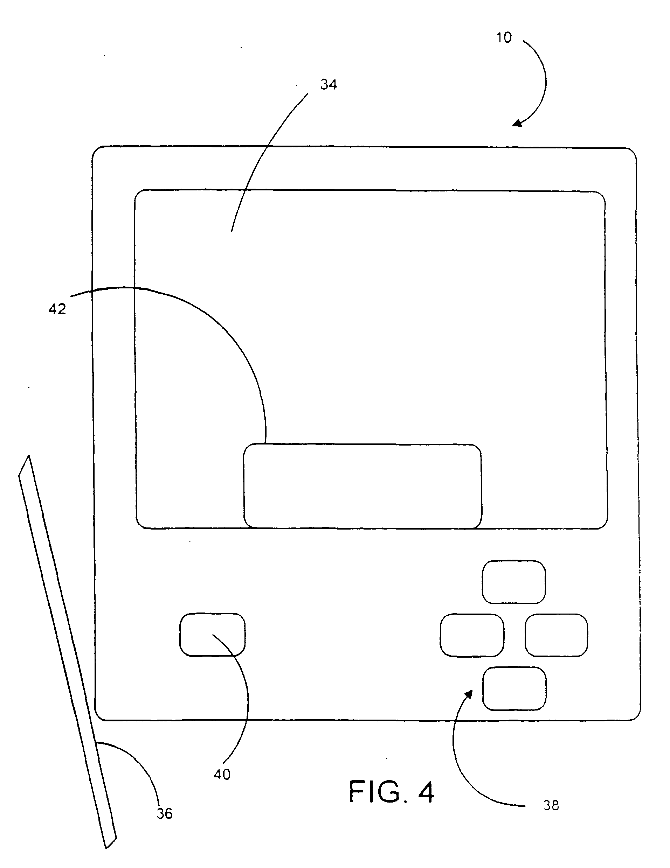

The I/O components 24, in one preferred embodiment, are provided to facilitate input and output operations from the user of the mobile device 10. The I/O components 24 are described in greater detail with respect to FIGS. 3 and 4.

The desktop computer communication interface 26 is optionally provided as any suitable, and commercially available, communication interface. The interface 26 is used to communicate with the desktop computer 12, as described with respect to FIG. 1.

The wireless receiver 27 receives information from the information source provider 13 and includes an antenna 31. The wireless receiver 27 is coupled to the bus 28 for communication with the processor 20 and the object store 18 to store information received from the wireless transport 14 in a manner described below.

A power supply 35 includes a battery 37 for powering the mobile device 10. The power supply 35 communicates with the processor 20 to control power provided to the above-described components. One aspect of the present invention is that the power supply 35 provides all power for the mobile device 10, including the wireless receiver 27 without the need for an external battery as typically found in the prior art. In a second aspect of the present invention, components of the mobile device 10, such as the I/O components 24, are provided power only when necessary to process the incoming information. This aspect of the present invention is discussed below in greater detail.

Optionally, the mobile device 10 can receive power from an external power source 41 that overrides or recharges the built-in battery 37. For instance, the external power source 41 can include a suitable AC or DC adapter, or a power docking cradle for the mobile device 10.

FIG. 3 is a simplified pictorial illustration of one preferred embodiment of the mobile device 10 which can be used in accordance with the present invention. The mobile device 10, as illustrated in FIG. 3, can be a desktop assistant sold under the designation H/PC having software provided by the Microsoft Corporation. In one preferred embodiment, the mobile device 10 includes a miniaturized keyboard 32, a display 34 and a stylus 36. In the embodiment shown in FIG. 3, the display 34 is a liquid crystal display (LCD) which uses a contact sensitive display screen in conjunction with the stylus 36. The stylus 36 is used to press or contact the display 34 at designated coordinates to accomplish certain user input functions. The miniaturized keyboard 32 is preferably implemented as a miniaturized alpha-numeric keyboard, with any suitable and desired function keys which are also provided for accomplishing certain user input functions.

FIG. 4 is another simplified pictorial illustration of the mobile device 10 in accordance with another preferred embodiment of the present invention. The mobile device 10, as illustrated in FIG. 4, includes some items which are similar to those described with respect to FIG. 3, and are similarly numbered. For instance, the mobile device 10, as shown in FIG. 4, also includes the touch sensitive display 34 which can be used, in conjunction with the stylus 36, to accomplish certain user input functions. It should be noted that the display 34 for the mobile device shown in FIGS. 3 and 4 can be the same size, or of sizes, but will typically be much smaller than a conventional display used with a desktop computer. For example, the display 34 shown in FIGS. 3 and 4 may be defined by a matrix of only 240x320 coordinates, or 160x160 coordinates, or any other suitable size.

The mobile device 10 shown in FIG. 4 also includes a number of user input keys or buttons (such as scroll buttons 38) which allow the user to scroll through menu options or other display options which are displayed on display 34, without contacting the display 34. In addition, the mobile device 10 shown in FIG. 4 also preferably includes a power button 40 which can be used to turn on and off the general power to the mobile device 10.

It should also be noted that in the embodiment illustrated in FIG. 4, the mobile device 10 includes a handwriting area 42. Handwriting area 42 can be used in conjunction with the stylus 36 such that the user can write messages which are stored in memory 22 for later use by the mobile device 10. In one preferred embodiment, the handwritten messages are simply stored in handwritten form and can be recalled by the user and displayed on the display 34 such that the user can review the handwritten messages entered into the mobile device 10. In another preferred embodiment, the mobile device 10 is provided with a character recognition module such that the user can enter alpha-numeric information into the mobile device 10 by writing that alpha-numeric information on the area 42 with the stylus 36. In that instance, the character recognition module in the mobile device 10 recognizes the alpha-numeric characters and converts the characters into computer recognizable alpha-numeric characters which can be used by the application programs 16 in the mobile device 10.

Although illustrated in FIGS. 3 and 4 as a handheld portable computer, it should be understood that the present invention can be used in other forms of portable computing devices such as laptops, computers designed for use in automobiles, and portable phones having computers.

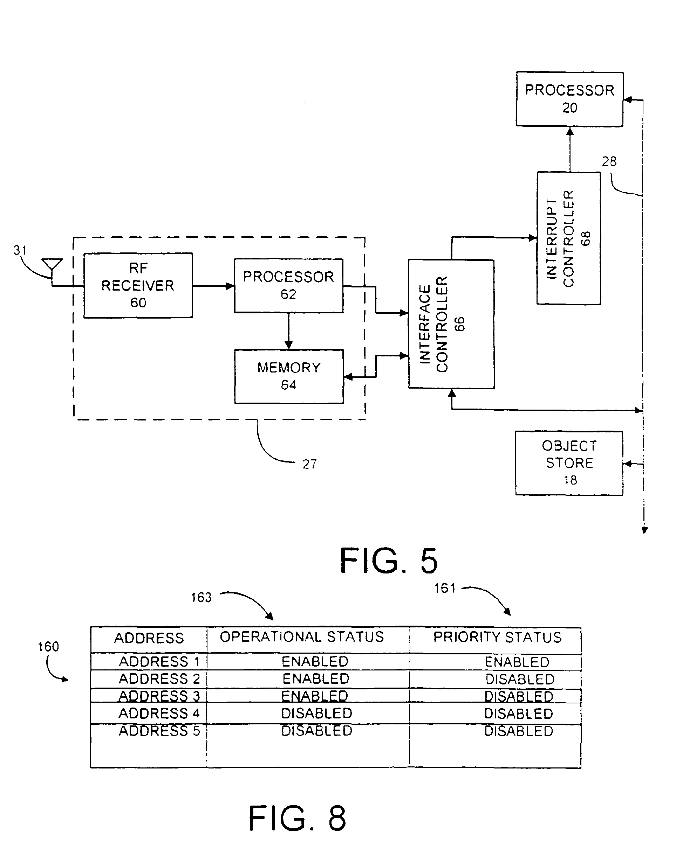

FIG. 5 is a simplified diagram of the wireless receiver 27 as coupled to other components of the mobile device 10. Generally, information sent by the wireless transport 14 is detected by a RF receiver 60 through the antenna 31. The RF receiver 60 provides the wireless information to a processor 62. The processor 62 temporarily stores the information in suitable memory, forming, for example, a FIFO (first-in-first-out) buffer. The processor 62 and memory 64 are operably coupled to an interface controller 66, which is commonly used to connect components to a computer system. In particular, the interface controller 66 couples the wireless receiver 27 to the bus 28 and to an interrupt controller 68 that is operably coupled to the processor 20 of the mobile device 10. The interface controller 66 is designed and operates according to known industry standards such as PCMCIA and Compact Flash Specifications. In one embodiment, the components of the wireless receiver 27 form a removable card that can be selectively coupled to an expansion slot provided in the mobile device 10 wherein suitable connectors are provided to couple the interface controller 66 to the bus 28 and the interrupt controller 68 as well as connect the wireless receiver 27 to the power supply 35 illustrated in FIG. 1. In the embodiment illustrated, the interrupt controller 68 is shown as being separate from the processor 20. In other embodiments, the interrupt controller 68 can be designed as part of the processor 20. The components of the wireless receiver 27 can be manufactured using known fabrication techniques as implemented in pagers, GSM phones, cellular phones or the like. Although illustrated and discussed below with respect to the processor 62, it should be understood that discrete components can also be used in place of the processor 62.

Operation of the wireless receiver 27 and the mobile device 10 is directed to efficiently use power from the power supply 35 in order to maximize the operational time between recharging or replacement of the battery 37. In one preferred embodiment, the wireless receiver 27 is powered and capable of receiving information from the wireless transport 14 at all times irrespective of whether other components of the mobile device 10 are operational and receiving power. This allows the wireless transport 14 to send information to the mobile device 10 even if the user is not interacting with the I/O components 24 of the mobile device 10.

When it is desired that the mobile device 10 receive information at all times, power from the power supply 35 is principally provided to the interrupt controller 68 and the wireless receiver 27, while all other components of the mobile device 10 do not receive power, or receive only enough power to operate in a "suspend" mode or state. For instance, the processor 20 can have three different modes of operation designed to maximize battery life by minimizing power consumption; full speed, standby and suspend. Full speed mode is used to execute applications. Standby mode is used during brief idle periods. Standby mode can use less than one-tenth (1/10th) of full speed power. Suspend mode is used during long idle periods. Suspend mode can use less than one-one thousandth (1/1000th) of full speed power.

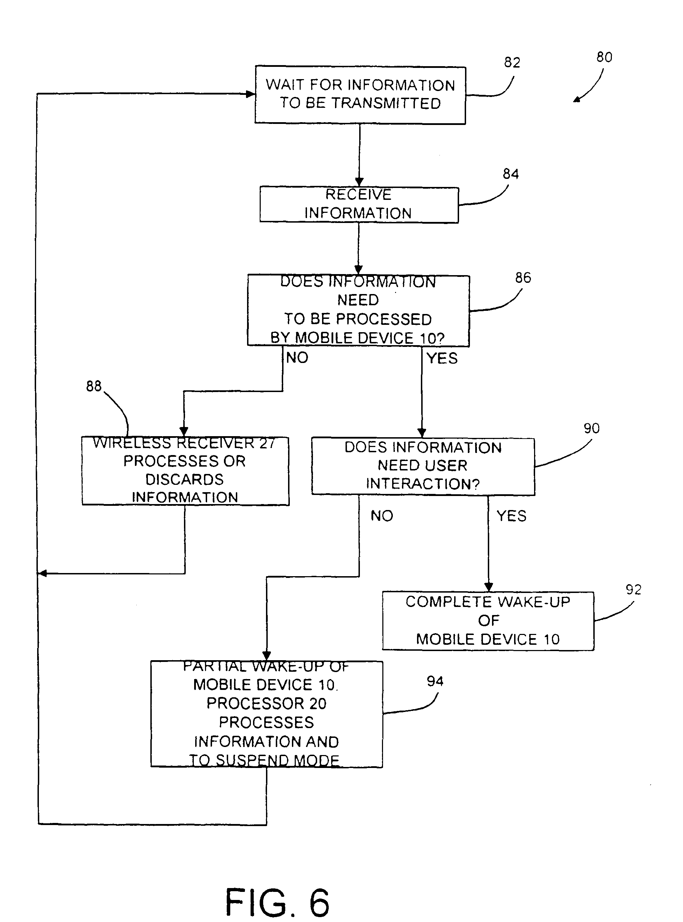

FIG. 6 illustrates a method of operation 80 of the mobile device 10 and the wireless receiver 27 to process information from the wireless receiver 27. At step 82, the wireless receiver 27 and the mobile device 10 await information to be sent from the wireless transport 14. It is assumed that only the wireless receiver 27 and the interrupt controller 68 are receiving power and operating, while all other components are either off or are in a suspend state, as discussed above.

At step 84, information is received by the RF receiver 60 from the wireless transport 14. The information is then processed by the wireless receiver 27 at step 86. In the embodiment illustrated, the processor 62 initially analyzes the information received and determines if the information requires further processing by the processor 20 of the mobile device 10 and/or storage of the information in the object store 18. If at step 86, the processor 62 determines that the processing or storage components of the mobile device 10 are not needed, operational flow continues to step 88 whereat the wireless receiver 27 processes or discards the information received. For instance, upon processing, the processor 62 can determine that the information received does not pertain to the mobile device 10, such as when a wireless address (capcode) does not pertain to the mobile device 10, and thus, the information can be discarded. Alternatively, the processor 62 can determine that all of the information can be temporarily stored in memory 64 for later retrieval by the processor 20 of the mobile device 10. After processing the information at step 88, operational flow returns to step 82 where the wireless receiver 27 awaits further transmitted information.

Steps 86 and 88 illustrate how the wireless receiver 27 can receive and process information without further interaction with other components of the mobile device 10. Thus, power consumption from the power supply 35 is conserved since none of the other components of the mobile device 10 have been turned on or operated at a higher power consumption rate.

If at step 86, the wireless receiver 27 determines that the information received must be further processed by the mobile device 10, operational flow continues to step 90. At step 90, the processor 20 is awoken by the interrupt controller 68 as initiated by the processor 62. The processor 20 retrieves the information stored in memory 64 and processes it to determine if user interaction is required. If user interaction is required, operational flow proceeds to step 92 whereat user input devices such as the keyboard 32 are activated and the user is notified of the information through the display 34.

If at step 90, the processor 20 determines that user interaction is not necessary to process the information, the processor 20 processes the information, turning on only those components of the mobile device 10 that are necessary at step 94. For instance, the information received by the wireless receiver 27 could have exceeded the memory capabilities of memory 64 and that the only required action is to store the information in the object store 18 or other temporary memory provided in the mobile device 10. In such a case, it is not necessary to activate or turn on the keyboard 32 or the display 34. The processor 20 merely performs the required actions such as storing the information in memory in the mobile device 10 and returns to the suspend mode. Operational flow then returns to step 82 whereat the wireless receiver awaits further transmitted information.

Steps 90 and 94 thus illustrate how power consumption is conserved since only a partial wake-up of the mobile device 10 has been performed to process the information. In other words, since only those components necessary to process the information have been turned on, while other components such as the display 34 remain off, power has been conserved and battery life has been extended.

At this point, it should also be noted that power can also conserved by monitoring the source of system wake-ups and powering down the system as a function of the source. In particular, if the system is started in order to process an incoming message from the radio receiver 27, the system can be immediately shutdown upon the completion of processing. In contrast, when the system is started by the user using the power button 40, or when the system starts to provide the user a scheduled notification, such as an upcoming appointment, commonly the system will shutdown when a period of non-use has occurred. Rather than waiting for the non-use period to lapse for processing an incoming message, the system will shutdown immediately. However, if the system comes up because of the radio receiver 27 and then the user turns on the system, the system is allowed to remain up and shutdown if the non-use period lapses. The source of system start can be monitored by the interrupt controller 68.

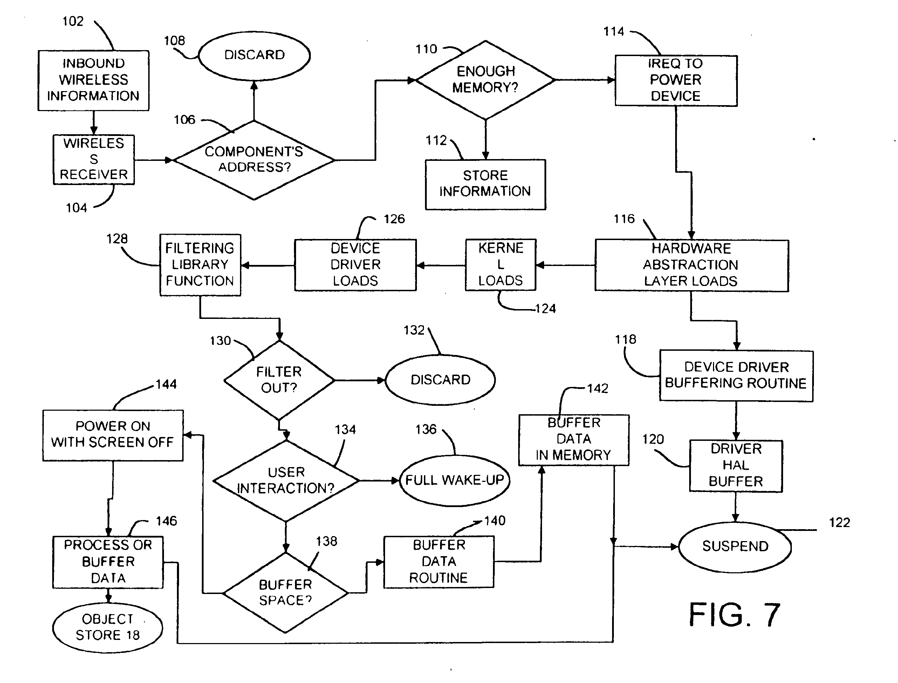

FIG. 7 illustrates a detailed method of operation of the wireless receiver 27 and the mobile device 10. Generally, the wireless receiver 27 and the mobile device 10 process three types of incoming messages. A first type of message is not related to the mobile device 10 and is discarded. A second type of message is for the mobile device 10, but either can be received now for further processing at a later time, or can be received and processed at a later time. A third type of message is a high priority message that must be processed immediately and may require user interaction. All of these messages are efficiently handled by the method of FIG. 7 to conserve power and maximize battery life.

In FIG. 7, wireless data 102 is received by the wireless receiver 27 as indicated at step 104. At step 106, the wireless information is examined by the processor 62 to ascertain if the wireless address of the information pertains to the mobile device 10. Typically, the wireless receiver 27 will be configured to respond to multiple wireless addresses, wherein each wireless address is used by one or a number of services to send information to the mobile device 10. For instance, one wireless address can be used to send high priority or personal messages to the mobile device 10, while other wireless addresses are used by one or more services to send other information to the mobile device 10. At step 106, the processor 62 ascertains if the wireless information pertains to a valid wireless address of the mobile device 10. If the wireless information does not pertain to the mobile device 10, it is discarded at step 108.

At step 110, valid information for the mobile device 10 is stored in memory 64 of the wireless receiver 27. At this step, the processor 62 ascertains whether all of the information can be stored in memory 64, or if the mobile device 10 must be at least partially woke up. If the entire incoming information can be stored in memory 64, and the information is not high priority, the processor 62 stores the incoming information at step 112. If, on the other hand, the processor 62 determines that the incoming information cannot be completely stored in memory 64, or that the incoming information pertains to a high priority message, for example, based on its wireless address, an interrupt request is generated at step 114 to wake up the processor 20 of the mobile device 10.

At this point, it should be noted that the size of memory 64 is proportional to the rate at which wireless information is received by the wireless receiver 27 and the amount of time necessary for the processor 20 of the mobile device 10 to wake up and begin extracting information from memory 64. In one embodiment, the minimum amount of memory is provided in the wireless receiver 27 to store information until the processor 20 wakes up. In this manner, the size of memory 64 present in the wireless receiver 27 is less, thereby reducing the overall size of the wireless receiver 27 and reducing its cost.

At step 116, the processor 20 of the mobile device 10 executes an initial body of code herein called the hardware abstraction layer (HAL). As part of the HAL wake-up code, HAL can call a function herein identified as CheckAndProcessRadioWakeup(). Generally, this function checks if the radio receiver 27 needs some service and whether this service can be handled within HAL or if more components of the device will need to be started. The return values include: (1) a first value indicating that the radio receiver 27 has been serviced and there is no need to start other components (herein the first value is "HRADIO_NOCONTINUE"); (2) a second value indicating that the display 34 should be turned on (herein the second value is "HRADIO_CONTINUE_VIDEO_ON"); and (3) a third value indicating that the display 34 should not be turned on (herein the third value is "HRADIO_CONTINUE_VIDEO_OFF"). It should be noted that the return values can be ignored if other wake-up events occur. For instance, if the user presses the power button 40 about the same time as a radio interrupt is also received, and if the return value is "HRADIO_NOCONTINUE" or "HRADIO_CONTINUE_VIDEO_OFF" the return value is ignored. In one embodiment, the radio receiver 27 registers information in a data block accessible by the HAL program indicative of the return values. The function is further described in detail in the Appendix along with other functions and related information.

Based on the return values, the processor 20 retrieves the information stored in memory 64 and examines it to determine if the processor can store the information temporarily in a temporary buffer herein called the HAL buffer 120. If temporary storage in the HAL buffer is possible, program flow continues to step 118 whereat the processor 20 executes a device driver buffering routine which stores the information in the HAL buffer 120 as indicated at step 120. The processor 20 then returns to the suspend state as indicated at step 122.

If, on the other hand, at step 116, the processor 20 determines that the information cannot be stored in the HAL buffer 120, for instance, where the information is high priority or of length exceeding the storage available in the HAL buffer 120, the processor 20 continues its wake-up process and a kernel is loaded at step 124. Each of the device drivers, such as a display driver, a serial port driver, etc., is then loaded at step 126. One particular driver that is loaded is a pager driver, which executes a filtering library function is indicated at step 128. The pager driver examines the information at step 130 to determine if the information is relevant to the mobile device 10. In contrast to step 106 where information is discarded if it does not correspond to a wireless address recognized by the mobile device 10, information is discarded at step 130 if, based on its content, it is not relevant to the mobile device 10. For instance, the user may want to receive only football scores and no other sports scores. However, all of the sports scores may be transmitted with respect to a particular wireless address, thus information on baseball scores would not be discarded at step 106 since this information was transmitted with respect to the correct wireless address for football scores. However, at step 130, the content of the information is examined so baseball scores would be discarded, while football scores are retained. Steps 116 to 128 are very efficient and quick. In particular, the filtering step 128 examines the initial few bytes of the information and can quickly determine if the information should be kept or discarded. The number and location of the bytes to examine are predetermined and agreed upon between the wireless information carrier and software developers. By examining only the first few bytes, the filtering step 128 can execute quickly (the processor 20 is up for less time) and does not require all of the operating system services to be started. Non-relevant information is discarded at step 132. It should be noted that upon loading of the pager driver at step 128, any information stored in the HAL buffer 120 at step 120 from prior messages is retrieved and processed.

It should be noted that in a further embodiment, the filtering step 128 can include other filtering parameters settable by applications executable on the mobile device 10. In other words, besides filtering on designated bytes within the message, as discussed above, the filtering library function can include other filtering parameters determined by application programs. For instance, a news viewer application can set a filter parameter where the mobile device 10 always rejects and does not store digital pictures and accepts only the accompanying text. The filter parameters can be passed from the application to the filtering library at filtering step 128 using, for example, application program interfaces (APIs). Filtering based on content is described in detail in co-pending application entitled "LOW LEVEL CONTENT FILTERING", filed on even date herewith and incorporated herein by reference.

If the information is relevant to the mobile device 10 and should not be discarded, program flow continues to step 134 to determine if user interaction is needed. For instance, if the message pertains to a high priority message requiring acknowledgement by the user, the mobile device 10 completely wakes up with activation of the display 34 to indicate that a message of high priority has been received. A full wake-up is indicated at step 136.

In one embodiment, high priority messages are ascertained as a function of wireless addresses. FIG. 8 is a pictorial representation of a list of wireless addresses 160. Associated with the radio addresses is information as to which addresses are "high priority". In the embodiment illustrated, priority status entries 161 are provided and are settable when an address is for high priority. Any information or message that arrives on an address whose priority status entry 161 has been set will cause a full wake-up of the mobile device 10.

If the information does not require user interaction, program flow continues to step 138. At step 138, if buffer space exists and no further processing is necessary, the processor 20 executes a buffer data routine at step 140 to store the information at step 142. The processor 20 then returns to the suspend state at step 122. If buffer space does not exist at step 138, the mobile device 10 is powered-up without the display 34 at step 144. The information is then processed or additional buffer space is obtained at step 146. If necessary, access and storage can be made in the object store 18. The processor 20 then returns to the suspend state at step 122. It should be noted that considerable power has been conserved since the user input/output (I/O) devices (display 34 and keyboard 32) have not been powered. However, if the user were to activate the mobile device 10 to turn it on, the display 34 would immediately enable.

The mobile device 10 processes incoming wireless messages according to the above-described method in the background whether or not the user is actively interacting with the mobile device 10 using the I/O components 24. It should be noted that if the user were to turn off the mobile device 10, the wireless receiver 27 will remain powered to receive incoming messages. If the user were to turn off the power during processing of an incoming message, the display 34 would turn off to indicate at least partial shut down of the mobile device 10; however, the incoming message would be processed according to the above-described procedure. In this manner, the "power off" signal is trapped and processed when processing of the incoming message is complete (unless the processing of the message results in the need to perform a full wake-up) .

Another aspect of the present invention allows for selective enabling and disabling of wireless addresses recognized by the wireless receiver 27. Referring back to step 106 in FIG. 7, the processor 62 (FIG. 5) examines the wireless address of information received and discards information at step 108 that does not pertain to a wireless address associated with the mobile device 10. One aspect of the present invention includes maintaining a list of recognized wireless addresses, for example, in memory 64, that the processor 62 can access when information is received. As stated above, FIG. 8 is a pictorial representation of a list 160 of wireless addresses. Each wireless address in the list 160 includes an associated operational status entry 163 indicating whether the wireless address is enabled or disabled. In a preferred embodiment, the list of wireless addresses is static in that the wireless addresses can not be changed by the user. However, whether the wireless address is enabled or disabled is under the control of the user and/or programming provided in the mobile device 10. Referring back to FIG. 5, the processor 20 of the mobile device 10 can selectively enable or disable each wireless address in the list 160 in memory 64 via the bus 28 and the interface controller 66.

Selective enabling and disabling of wireless addresses allows the mobile device 10 to further extend battery life by not receiving information that is not of high priority. For instance, the user may subscribe to an information service that provides general sports information that is transmitted with respect to a certain wireless address. This information may be repeatedly transmitted over a given time period such as a number of hours. If the wireless receiver 27 were to continually process the information each time it is transmitted, possibly waking up the mobile device 10 to process the information, the battery 37 (FIG. 1) can be quickly depleted. By selectively enabling or disabling the wireless address in the list 160 pertaining to this information, the wireless receiver 27 can quickly discard the information at step 106 (FIG. 7) in order tc conserve battery power. For instance, the processor 20 of the mobile device 10 can enable the wireless address pertaining to sports information in list 160 when the mobile device 10 is receiving power from the external power source 41 (FIG. 1). If the mobile device 10 is operating under battery power, the processor 20 can disable the wireless address pertaining to the sports information in order to extend battery life.

### APPENDIX

### 1.1.1 Overview

Wireless Services for Windows CE defines a hardware, device drivers, and overall architecture for the incorporation of message-based radio into a Windows CE device. The goal is to create a framework within which applications, system services and hardware all remain modular with respect to each other, thus providing the environment for a wide range of applications.

This appendix addresses what support the device drivers need to provide to meet the following requirements:
1. Power saving achieved by not waking up the whole system.
2. Doing background processing without turning on video

### 1.1.2 Terminology

| | |
|---|---|
| Device | Windows CE hardware (e.g. Palm PC. Auto PC) |
| Radio | Radio HW for a device (e.g. a paging card) |
| OEM | Original Equipment Manufacturer - In this document this term refers to the device manufacturers |
| IHV | Independent HW Vendor - In this document IHV refers to the radio manufacturer (who develops the HW and/or device driver) |
| HAL | Hardware Abstraction Layer. This is implemented by each OEM to abstract their HW implementations from the Windows CE operating system. |
| LCD and VIDEO | These two terms have been used interchangeably and refer to the display panel on the device. |

### 1.1.3 Overview

A typical radio device *listens* to the radio transmissions and determines if there is a message for the user. This determination is based on one or more addresses' that are programmed in the radio receiver or hardware (HW). The radio HW is powered independently (i.e., it is powered even when the Windows CE device is powered down) and the radio HW carries out the lowest level of filtering without requiring the Windows CE device to be powered on. This achieves some level of power savings since radio HW. typically require only a fraction of power compared to the Windows CE device.

Wireless Information Services for Windows CE provides for additional levels of filtering that may or may not be carried out in the radio HW. If the radio HW is separately powered and has enough logic to do additional filtering independent of the device CPU, then it will not cause major power drain from the device power supply. However, it is expected that the majority of the radio HW will be in the Compact Flash card type II form factor (a form factor for most devices) and will not have separate power or CPU due to size constraints. These cards, therefore, will cause a wakeup of the device so that some processing is carried out in the device driver.

Another way to achieve power saving is not to wakeup the system for each message but to buffer them for group processing at a later time. The radio HW may not have enough memory and to use the Windows CE device memory for this purpose will ordinarily require the device to be woken up to run the device driver code that copies message from the radio HW to the system memory. In this case we want the system to be up for a very short duration and there is no need for the display and other subsystems to be powered on. Thus, the power saving goals can be summarized as:
- System comes up quickly and stays powered on for as little time as possible
- The LCD is not turned on until it is needed
- System shuts down as soon as possible (currently, once the system is up, it does a time out of the order of 1-5 minutes to shutdown)

To achieve the above goals. Win CE Radio device drivers support a state called Partial Wakeup state. This refers to the device state just after wakeup where HAL has initialized but the kernel and file system are not fully initialized. The objective is to do some processing in this state to filter out unwanted messages and shut down the system as soon as possible, ideally from the partial wakeup state itself.

### 1.1.4 Driver Support for Partial Wakeup

This section describes what support needs to be provided in the driver.

### 1.1.4.1 RI0_Init()

During system initialization, radio driver initialization function RIO_Init() is called. In addition to the other initialization, it should call a MS supplied function called RegisterWakeup() and supply the address of a call back function as parameter. The call back function (called CheckAndProcessRadioWakeup() in this document) is described below.

See section 1.1.8 for sample code for RIO_init() function.

Section 1.1.6.1 describes RegisterWakeup() function that does the following:
1. Calls VirtualAlloc() to allocate needed memory space. This space will be used to store pointers to buffers for radio and other data (e.g. data for filtering functions). This memory is referred to as Radio Control Block.
2. Makes the kernel call to lock the driver code and allocated buffers in memory.
3. Calls HAL IOCTL calls and registers a function in driver space that will be called by HAL during warm boot when the wakeup source is radio (this function, called CheckAndProcessRadioWakeup() in this document, determines if the wakeup should continue or not). HAL maintains a data structure for each device driver to store this function pointer.

### 1.1.4.2 Registered wakeup callback function

The radio driver is expected to supply a function which will be called during the system wakeup sequence from HAL. This function executes in the partial wakeup state and therefore has many limitations and requirements (described later). The main purpose of this function is to achieve power savings for the device. Power saving is achieved in many ways as listed below:
- The function could simply read the data off the radio HW and buffer it in the memory blocks for later processing. It could also implement low level filtering (e.g. group level filtering, if the radio HW is not capable of doing it). In this case the function returns a value indicating that system wakeup is not required (in this scenario this function acts like an interrupt service routine, quickly servicing the radio HW and shutting down the system as soon as possible)
- If the system buffers are full, the function could return a value indicating to the HAL that a system wakeup is required but there is no need to power the display. In this scenario, the system will wakeup and execute message router and other components that process the messages and most likely will shut down the system after processing is complete.
- If the data is high priority (e.g. a personal page), the function should return a value indicating to the HAL that a full system wakeup is required because this message will most likely cause a user notification.

### 1.1.5 Data Structures

### 1.1.5.1 Radio control block

The radio control block data structure is maintained by HAL. A pointer to the radio control block is passed to the registered function (called CheckAndProcessRadioWakeup() in this document). The radio control block holds pointers to memory blocks that contain data or code. These memory blocks are allocated using VirtualAlloc() function, are locked down so that they are accessible during partial wakeup state, and are accessed using physical addresses.

The radio control block is an array of RADIO_BLOCK which is defined below:

```
      typedef struct _hradio_block {
            DWORD dwId; // Block ID
            DWORD PAddr; // Physical address of
                   block
            DWORD VAddr; // Virtual address of
                   block
            DWORD dwSize; // Size of block
      } HRADIO_BLOCK, *LPHRADIO_BLOCK;
```

The block can be either a pointer to code or a pointer to data as determined by the dwld field. The Ids are generated using macros defined in the next section.

### 1.1.5.2 Block ID Macros

The radio control block stores pointers to code or data that needs to be accessed during partial wakeup state. The entries are tagged using an id, which is generated using one of the macros defined below:

### HRADIO_MAKE_DRIVER_ID (Par1, Par2)

Generates an id for a driver function or data block. *Parl* can be either HRADIO_DATA (for defining a data block pointer) or HRADIO_CODE (for defining a function pointer). *Par2* is an unsigned 16-bit value.

### HRADIO_MAKE_SYSTEM_ID (Parl, Par2. Par3)

Generates an id for a known system function or data block. These ids are used internally by the system and should not be used by the device drivers. *Par1* can be either HRADIO_DATA (for defining a data block pointer) or HRADIO_CODE (for defining a function pointer). *Par2* and *Par3* have the following meanings:

| Par2 | Par3 | |
|---|---|---|
| 0 | HRADIO_WAKEUP | Pointer to the partial wakeup call back function or data |
| 0 | HRADIO_ANALYZE_MSG | Pointer to the AnalyzeMessage() function or data |
| 0 | HRADIO_FILTER | Pointer to the FilterMessage() function or data |
| Address | Group | Pointer to application filter function or data for the given address/group combination |

### 1.1.6 Function Reference - MS Supplied Functions

### 1.1.6.1 RegisterWakeup()

This function does the following:
- Creates the Radio control block (VirtualAlloc(), lock it, register with the HAL)
- Makes HAL IOCTL call to register the wakeup callback function (which will be called by HAL during partial wakeup sequence)
- Makes HAL IOCTL call to register AnalyzeMessage() function (which deciphers the message header)
- Makes HAL IOCTL call to register FilterMessage() function (which invokes the application level filtering functions)

### Syntax

### LPHRADI0_BLOCK RegisterWakeup(

BYTE DeviceId,

BYTE NumBlocks,

LPVOID pWakeupFn,

DWORD dwWakeupFnSize)

### Parameters

- DeviceId: Identifies the device controlled by this driver (this parameter is derived from the parameter passed to the RIO_Init() function)
- NumBlocks: Number of *additional* radio control block entries needed by the driver (driver will need one entry for each buffer or function it intends to use during partial wakeup state). This does not include system required entries, e.g. the partial wakeup callback function etc.
- pWakeupFn: Pointer to the partial wakeup callback function.
- dwWakeupFnSize: Size in bytes of the partial wakeup callback function. If not used, pass a 0 value.

### Return Value

Returns pointer to the radio control block if successful. NULL otherwise.

### 1.1.6.2 LocateAndCallAnalyzeMessage()

This function locates and invokes the AnalyzeMessage() function *in partial wakeup state* (driver can call the AnalyzeMessage() function directly in other places).

### Syntax

### BOOL LocateAndCallAnalyzeMessage (

**VOID** *pMsg,

**DWORD** dwMsgLen,

**BOOL** *pfDiscard,

**BYTE** *pGroupCode)

### Parameters

- pMsg: Pointer to the message bytes.
- dwMsgLen: Length of the message.
- pfDiscard: Receives a BOOL value indicating whether the message should be discarded or kept.
- pGroupCode: Receives the Group code.

### Return Value

Returns TRUE if message had a valid WS header, FALSE otherwise. When it returns TRUE, pGroupCode receives the group code and pfDiscard receives a BOOL value indicating whether the message should be kept or not (TRUE=discard).

### 1.1.6.3 LocateAndCallFilterMessage()

This function locates and invokes the application level filtering mechanism.

### Syntax

### BOOL LocateAndCallFilterMessage (

VOID *pMsg,

DWORD dwMsgLen.

BYTE Address,

BYTE GroupCode)

### Parameters

- pMsg: Pointer to the message bytes.
- dwMsgLen: Length of the message.
- Address: Address number this message came on.
- GroupCode: Group code this message came on.

### Return Value

Returns TRUE if message should be kept, FALSE if it should be discarded.

### 1.1.6.4 RegisterBlock()

Allocates a memory block, locks it down, and creates an entry in the radio control block for it. Then data from the supplied buffer is copied into this newly allocated memory block.

### Syntax

### LPHRADIO_BLOCK RegisterBlock(BYTE DeviceId-, DWORD dwBlockId,

LPBYTE lpbData,

DWORD dwDataLen)

### Parameters

- DeviceId: The block will be added to the radio control block for this device.
- dwBlockId: Block ld to be assigned (This id must be output of macros defined in 1.1.5.2)
- IpbData: Pointer to the data that will be copied in a newly allocated memory block.
- dwDataLen: Length of the data (this is the size of the newly allocated memory block)

### ReturnValue

Null is returned if data block can't be created. pointer to the created radio block is returned otherwise.

### Remarks

The dwBlockId also indicates whether the block is a code block (function) or data block (buffer).

### 1.1.6.5 LocateBlock()

This function searches the radio control block for the given block id.

### Syntax

LPHRADIO_BLOCK LocateBlock (BYTE DeviceId, DWORD dwBlockId)

### Parameters

- DeviceId: The block will be searched in the radio control block for this device.
- dwBlockId: Block Id to be assigned (This id must be output of macros defined in 1.1.5.2)

### ReturnValue

Returns pointer to radio block if ID found, else returns NULL

### 1.1.6.6 Busy()

This function increments or decrements the system busy counter.

### Syntax

WORD Busy(BYTE State)

### Parameters

- State: If TRUE, increments the busy counter. FALSE decrements busy counter.

### Return Value

Returns current value of system busy counter.

### 1.1.6.7 Video()

This function turns the video on or off.

### Syntax

BOOL Video(BYTE State)

### Parameters

- State: If TRUE, turns video on. FALSE turns video off.

### ReturnValue

Returns TRUE if operation completed. FALSE otherwise.

### 1:1.7 Function Reference - IHV Supplied Functions

### 1.1.7.1 CheckAndProcessRadioWakeup()

This function is statically part of the radio driver but is called by the HAL during warm boot. The main purpose of this function is to check if the radio device needs some service and whether this service can be handled within HAL or it requires the whole system to be woken up.

### Syntax

```
         DWORD Check And Process Radio Wakeup (
           DWORD MemPtr Pointer to radio control block
           )
```

### Description

This function is called in response to the wakeup interrupt from the radio device (RING_INDICATE interrupt). This function is called by HAL before the kernel is initialized (*partial wakeup state*)*.* Because of this, this function must meet the following criteria:
- The function must be on a page boundary.
- The function will be executed in physical mode
- The function must not call any OS or file system calls.
- The function must not call any other function. (If it needs to call other driver supplied functions, they must be called via a function pointer table initialized during startup. See **Error! Reference source not found**. and **Error! Reference source not found.** for details.)

The function should read the data from the radio device and determine if the data needs to be kept or discarded. If the data needs to be kept, it should further determine if it is high priority data (see device driver specifications for discussion of address and group property flags). High priority data needs to be processed immediately and will require a full wakeup. Low priority data may be buffered in memory allocated during startup. If that memory is full, a full wake up is again required to flush that memory. In either case, the data is read off the radio device and appropriate return value is passed to the HAL.

The skeleton of this function is:
- read data off the radio HW
- Call AnalyzeMessage() to get the group code information from the message header
- Do group level filtering (if the HW has not done it)
- Invoke application level filtering mechanism. Do message filtering based on the return code.
- if message is to be kept, then buffer it and return appropriate return code

Since this function is executed during the partial wakeup state, it can not make function calls directly. Instead a support library has the following two functions to invoke the AnalyzeMessage() and filter mechanism:
LocateAndCallAnalyzeMessage() - this function invokes the AnalyzeMessage() function described in the device driver specifications.
LocateAndCallFilterMessage() - this function invokes application level filtering (to be documented).

### Return Values:

### HRADIO_NOCONTINUE

The device has been serviced, no need to continue the warm boot. An example of this case would be when the radio device has a new message that can be buffered in the system memory (done by this function) and no further processing is required.

### HRADIO_CONTINUE_VIDEO_ON

The device service needs the system to continue the warm boot with video (the video should be powered on too). An example of this case would be when a message is received on a priority address that will cause a notification to be issued.

### HRADIO_CONTINUE_VIDEO_OFF

The device service needs the system to continue the warm boot without video (the video should not be powered on). An example of this case would be when a broadcast message is received when the system memory buffer is full, so processing should continue without video so the system buffer can be flushed.

### Remarks:

The partial call back function is quite similar to the interrupt service function (ISR) (also supplied by the driver). However, there are some significant differences as outlined below:

| **ISR** | **Partial wakeup call back function** |
|---|---|
| Registered using CardRequestIRQ() | Registered using RegisterWakeup() |
| Registered for a specified socket and function pair. | Registered for a driver. |
| Interrupt condition cleared by Card Services. | Call back function needs to clear the interrupt |
| | condition. |
| Return as quickly as possible. If more processing needed, spawn a thread and return. | Return as quickly as possible, can not spawn a thread. |
| Kernel and file system services available. | No kernel or file system services. |
| Always called to handle the interrupt from the radio HW. | Called only if the interrupt causes a system wakeup (if the system is already up at the time of the interrupt, only the ISR gets to execute). |
| Responsible to copy the message from the radio HW, to analyze it, and to filter it. Can call the MS supplied functions directly to do these. | Responsible to copy the message from the radio HW, to analyze it, and to filter it. Can call the MS supplied functions using special indirection methods only. |
| Is a normal user-mode function. | Is a special function that executes in physical mode and has special restriction on it (e.g., must be on a page boundary, can not call other functions, etc.) |

### 1.1.8 Sample Code

### 1.1.8.1 RIO_Init()

```
 HINSTANCE HalLib;
 LPHRADIO_BLOCK HalMem;

 // Since the Register function needs to be located on
 // a page boundary, the following pragma assures that.
 DWORD CheckAndProcessRadioWakeup(DWORD);
 #pragma alloc_text (".wakeup)", CheckAndProcessRadioakeup;

 ...
 HalLib = LoadDriver(TEXT("riohal.dll"));
 if (HalLib) {
   func = GetProcAddress(pRadioCtl->HalLib,
                   TEXT("RegisterWakeup"));
   if (func) {
             // Call RegisterWakeup()
             HalMem = (LPHRADIO_BLOCK)
                   (*func) ((DWORD) CheckAndProcessRadioWakeup);
     }
 }
```

### 1.1.8.2 CheckAndProcessRadioWakeup()

```
 LPBYTE pAddressTag, pGroupTag;
 BOOL fDiscard, fGroupFound;
 BYTE GroupCode;
 char *p, buf[1000];
 BYTE bMsgBuf[MAX_MSG_SIZE];
 WORD dwMsgSize;
 char address = 1;

 // Fill szMsaBuf[] with message data from the Radio HW
 // do group filterning
 fGroupFound = LocateAndCallAnalyzeMessage(bMsgBuf, dwMsgSize,
                                 &fDiscard, &GroupCode);
 if (fGroupFound) {
      if (fDiscard) [
             // discard message
             return HRADIO_NOCONTINUE;
      }
      // Search driver data structure for group info relating
      to
      // the address this message came on and the group code
      // (returned by the AnalyzeMessage() above
      // if GroupCode is not found or it is disabled then
      // also discard the message
      if (!LocateAndCall FilterMessage(bMsgBuf, dwMsgSize,
                          Address, GroupCode))
      {
             // discard message
             return HRADIO _NOCONTINUE;
       }
       // here buffer the message and return HRADIO_NOCONTINUER
       // if buffer full then return HRADIO_CONTINUE_VIDEO_OFF
 } else {
       // treat as a normal page message (cause full wakeup,
       etc.)
       ...
       return HRADIO_CONTINUE_VIDEO_OFF;
 }
```

### 1.1.9 Type Definitions

This section defines the types used in the driver API.

### 1.1.9.1 Basic Types

The following basic types are used:
- BYTE: Unsigned 8-bit
- WORD: Signed 16-bit
- DWORD: Signed 32-bit

### 1.1.9.2 Complex Types (structs)

All structures have the following three fields at the beginning:
WORD wOperationCode Indicates what operations needs to be performed. This field also determines the rest of the struct.
WORD wStructSize Each struct has fixed size fields followed by the length of the variable fields. The variable fields follow in the same order as their lengths. The wStructSize field holds the size in bytes of the fixed part of the struct (i.e., fixed fields and the lengths of the variable fields). This field provides a versioning method as well and will be used for backward compatibility in the future releases.

In addition, the variable length fields are grouped towards the end a length field for each one of them is provided. This allows expanding these structures without losing backward or forward compatibility.

### 1.1.9.3 struct HRADIO_REGISTER

This struct is used for registering a wakeup function.

| **Size** | **Field** |
|---|---|
| 2 | WOperationCode |
| 2 | WStructSize |
| 4 | DwMemPtr |
| 1 | Device |

- WORD wOperationCode: HAL_IOCTL_CMD_REGISTER_W AKEUP_FUNCTION
- WORD wStructSize: sizeof (HRADIO_REGISTER)
- DWORD dwMemPtr: Pointer to a memory block (RMB). The second DWORD of this memory block contains a pointer to the function that will be called by HAL during wakeup to determine if power on sequence should continue or not.
- BYTE Device: Device number (This is how HAL distinguishes one device's RMB from another).

### 1.1.9.4 struct HRADIO_FLAG

This struct use used for operations on the HAL flags.

| **Size** | **Field** |
|---|---|
| 2 | WoperationCode |
| 2 | WStructSize |
| 2 | wFlag |

- WORD: wOperationCode One for the following values:
HRADIO_CMD_FLAG_SET
HRADIO_CMD_FLAG_CLEAR
HRADIO_CMD_FLAG_GET
- WORD wStructSize: sizeof(HRADIO_FLAG)
- WORD wFlag: A code indicating which HAL flags is affected by the requested operation. Values are:
HRADIO_FLAG_VIDEO_STATE
HRADIO_FLAG_SYSTEM_BUSY

### 1.1.9.5 struct HRADIO_LOCK

This struct use used for operations on locking and unlocking memory.

| **Size** | **field** |
|---|---|
| 2 | wOperationCode |
| 2 | wStructSize |
| 4 | dwMemPtr |
| 4 | dwSize |

- WORD: wOperationCode One for the following values:
HRADIO_CMD_LOCKPAGE
HRADIO_CMD_UNLOCKPAGE.
- WORD wStructSize: sizeof(HRADIO_LOCK)
- DWORD dwMemPtr: A virtual pointer to memory to be locked or unlocked.
- DWORD dwSize: The total number of bytes to be locked or unlocked.

### 1.1.10 HAL Flags

The following flags form part of the HAL:

| Flag | Type | Meaning |
|---|---|---|
| HAL_fVideoState | Bool | Set if the video is currently powered on, reset otherwise. Set on cold boot. (When the flag is set using HRADIO_CMD_FLAG_SET command, the video is turned ON. When it is reset, the video is turned off). |
| HAL_SystemBusy | Counter | This needs to be implemented as a counter (at least one byte). If |
| | | non-zero, HAL will trap power off button to prevent system from shutting down. HRADIO_CMD_FLAG_SET command increments the counter, HRADIO_FLAG_CLEAR decrements it. Initialized to 0 on cold boot. |

### 1.1.11 HAL IOCTL calls

In Windows CE systems, HAL supports IO Control calls to perform operations that are specific to their hardware. Most OEMs already implement the following IOCTL call for other services.

### Syntax

**BOOL OEMIOControl(**
DWORD dwCode
**PBYTE** *pBufIn*
**DWORD** *dwLenIn*
**PBYTE** *pBufOut*
**DWORD** *dwLenOut*
**PDWORD** *pdwActualOut*
);

### Parameters

- dwCode: Specifies a value indicating the I/O control operation to perform. The code used will be IOCTL-HAL-RADIO-CNTRL.
- pBufln: Points to the buffer containing data that is input to the HAL.
- dwLenIn: Specifies the number of bytes of data in the buffer specified for *pBufIn.*
- pBufOut: Points to the buffer used to transfer the output data.
- dwLenOut: Specifies the maximum number of bytes in the buffer specified by *pBufOut*
- pdwActualOut: Points to DWORD buffer the function uses to return the actual number of bytes received from the device.

### Return Value

Returns TRUE if the HAL successfully completed its specified I/O control operation, otherwise it returns FALSE.

### 1.1.11.1 HRADIO_CMD_REGISTER

### Syntax

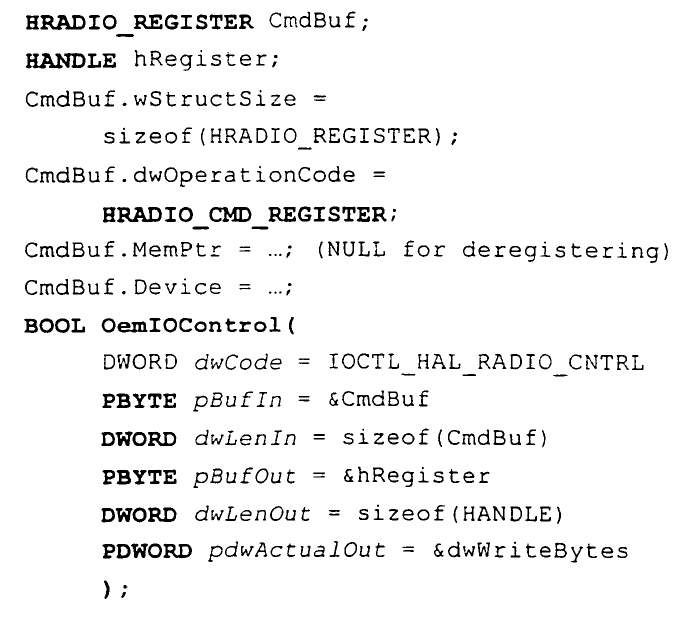

### Operation

This call registers a radio memory block (RMB) that contains a pointer to the wakeup function that is called during HAL power on processing. If the MemPtr member is NULL then the call does de-registration.

The output buffer returns a handle to the RMB (address of the HAL data structure where the device memory block was saved).

### Remarks

The function supplied must be statically bound to the driver code and small enough to fit within a memory page.

### 1.1.11.2 HRADIO_CMD_FLAG_XXX

### Syntax

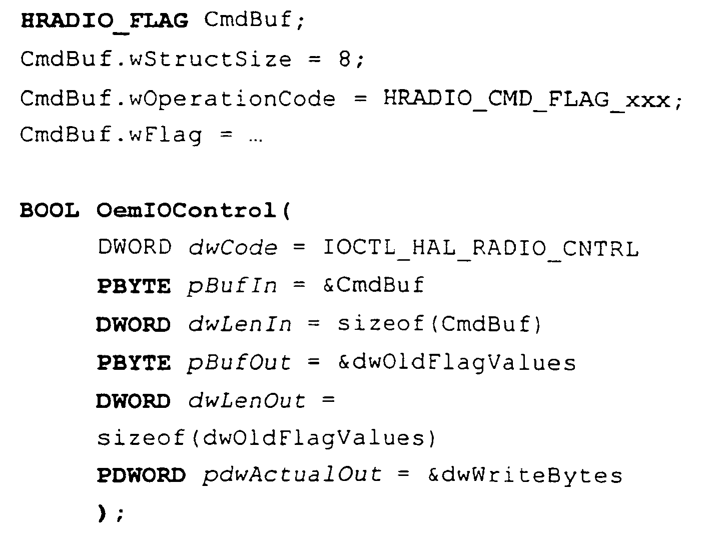

Note: pBufOut, dwLenOut, and pdwActualOut are used for GET operation only. Set them to NULL for other operations.

### Operation

The operation depends upon the operation code stored in dwOperationCode member and is described below:
HAL_OCTL_CMD_SET_FLAG
   If the indicated flag is a Boolean flag then set it to TRUE. If it is a counter flag, then increment it.
HAL_IOCTL_CMD_RESET_FLAG
   If the indicated flag is a Boolean flag then set it to FALSE. If it is a counter flag and is non-zero, then decrement it.
HAL_IOCTL_CMD_GET_FLAG
   Value of the indicated flag is returned in pBufOut. For simplicity, the flag value is always returned as a DWORD (so pBufOut must be large enough to hold at least one DWORD).
***Additional processing for HRADIO_FLAG***_***VIDEO_STATE:***
   If the flag changes its state because of a set or a reset command, the video needs to be turned on or off to correctly reflect the new state of this flag. For example, if the HAL_fVideoState is 0 and a HAL_IOCTL_CMD_FLAG_SET is issued on this flag, then the video needs to be turned on. If the flag was already set to 1 (hence the video is already on), then this set command will have no effect and there is no need for any additional processing (the video is already ON).

### Remarks

The HAL flags are accessible to the drivers directly (they don't need to make these IOCTL calls).

### 1.1.11.3 HRADIO_CMD_LOCKPAGE

### Syntax

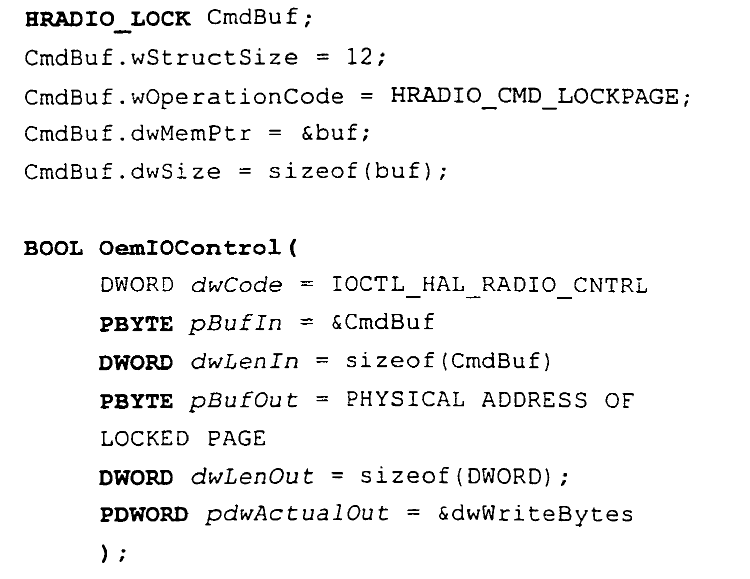

### Operation

This operation locks down the memory pointed to my dwMemPtr. The number of pages locked will be determined by the page size and the value ofdwSize. The value returned will be the physical address of the first byte pointed to dwMemPtr. This value will normally be adjusted to be not cached and accessible at initial power on.

### 1.1.11.4 HRADIO_CMD_UNLOCKPAGE

### Syntax

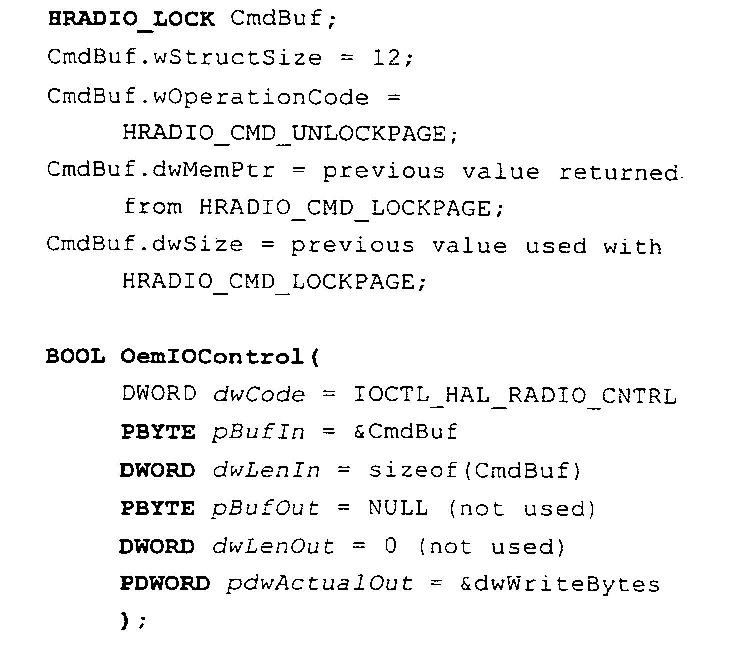

### Operation

This operation unlocks the memory pointed to my dwMemPtr. The number of pages unlocked will be determined by the page size and the value of dwSize. This function is used to unlock previously locked memory.

### 1.1.12. HAL LCD Changes

The LCD initialization code needs to check the wakeup source and determine if the LCD should be turned on or not. If HAL_fVideoRequest flag is implemented, then the processing would be as follows:

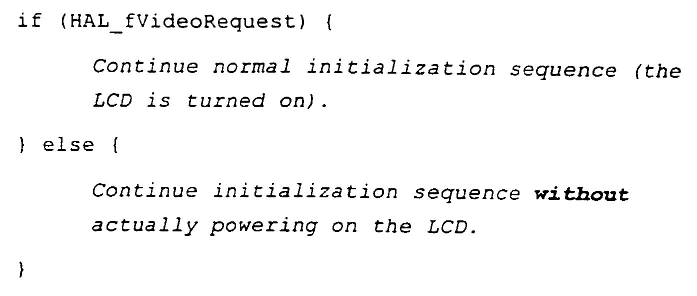

The LCD code also needs to correctly set HAL_fVideoState flag: TRUE when the LCD is powered ON, and FALSE when it is not.

### 1.1.13 HAL Touch Screen Considerations

If the touch screen can not be turned of when the video is turned off, then the touch interrupt should be ignored if the video is currently off (ie, HAL_fVideoState = FALSE). For devices that support the touch screen to turn on the device, then the video should be turned on, and the touch interrupt event should be discarded. This can be done by the following code: 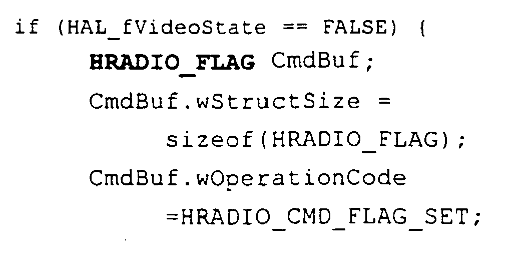 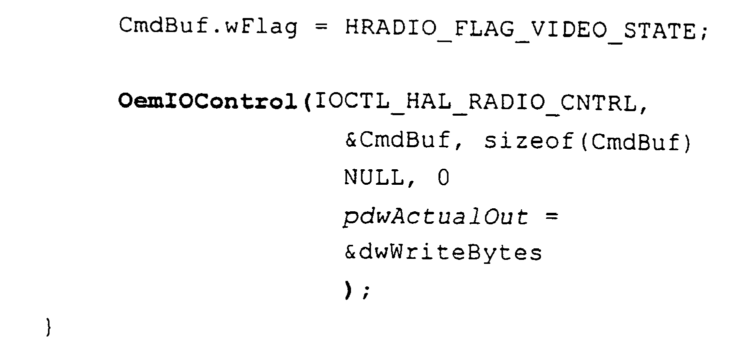 Note that above is just an example code that uses an HAL IOCTL to turn on the video. It is possible that the code to turn on video is trivial (or is available as function) in which case that code can be used directly. No matter how this is done, care must be taken to ensure that HAL_fVideoState correctly reflects the true state of the video (ON=1 or OFF=0).

### 1.1.14 HAL Keyboard Considerations

1. When the HAL detects a key, it also needs to check HAL_fVideoState and if it is not set (i.e., video is currently not on) then it needs to turn on the video using the HAL IOCTL call (same code as in touch driver) and eats the key.
2. An additional change is required to implement the delayed power off feature. On every power off key press, do the following

```
       if (HAL_SystemBusy &&
              (KeyPressed == KEY_POWER_OFF)) {
           Turn video off and ignore the key
           //see 1.1.13 for the sample code and
           //comment about HAL_fVideoState
       }
```

### 1.1.15 OOM system Considerations

The OOM (out of memory message) code needs to check HAL_fVideoState and if it is not set (i.e., video is currently not on) then it needs to turn on the video using the HAL IOCTL call. It also needs to clear the HAL_SystemBusy flag.

### Sample Code:

```
 HRADIO_FLAG CmdBuf;
 CmdBuf.wStructSize = sizoef(HRADIO_FLAG);
 CmdBuf.wOperationCode = HRADIO_CMD_FLAG_SET;
 CmdBuf.wFlag = HRADIO_FLAG_VIDEO_STATE;

 OemIOControl(
       IOCTL_HAL_RADIO_CNTRL, // DWORD dwCode
      &CmdBuf, // PBYTE pBufIn
      sizeof(CmdBuf), // DWORD dwLenIn
      NULL, // PBYTE pBufOut
      0, // DWORD dwLenOut
      &dwWriteBytes // PDWORD pdwActualOut
 );
 CmdBuf.wFlag = HRADIO_FLAG_SYSTEM_BUSY;
 DWORD dwValue;

 while (1) {
      // get the value of SystemBusy counter
      CmdBuf.wOperationCode = HRADIO_CMD_GET:
      if (OemIOControl(
             IOCTL_HAL_RADIO_CNTRL, // DWORD dwCode
             &CmdBuf, // PBYTE pBufIn
             sizeof(CmdBuf), // DWORD dwLenIn
             &dwValue // PBYTE pBufOut
             sizeof (dwValue), // DWORD
 dwLenOut
             &dwWriteBytes // PDWORD
 pdwActualOut
       ) {
             if (dwValue == 0) {
                   break; // we are done
             }

             // decrement SystemBusy counter
             CmdBuf.dwOperationCode = HRADIO_CMD_CLEAR;
             if (!OemIOControl(
                   IOCTL_HAL_RADIO_CNTRL, // DWORD dwCode
                   &CmdBuf, // PBYTE pBufIn
                   sizeof (CmdBuf), // DWORD dwLenIn
                   NULL, // PBYTE pBufOut
                   0, // DWORD
 dwLenOut
                   &dwWriteBytes // PDWORD
 pdwActualOut
             ) {
                   break;
             }
      }
 }
```

### 1.1.16 OEM_Idle() Considerations

OEM_Idle() is called by the Windows CE kernel when there are no more threads or tasks to execute. This function is expected to do a timeout (typically I - 5 minutes) and if no system activity is detected, the system is shutdown.

To implement the immediate shutdown feature, this function should check HAL_fVideoState flag. If it is clear (Video is off) then it does not need to do the idle timeout and should shutdown the system immediately.

### 1.1.17 Sample Code

### 1.1.17.1 HAL IOCTL Implementation

BOOL OEMIoControl(DWORD dwioControlCode, LPVOID IpInBuf, DWORD nlnBufSize,

```
       LPVOID IpOutBuf. DWORD nOutBufSize, LPDWORD
 IpBytesReturned) {
   BOOL retval = FALSE;
   DWORD len;
    DWORD PhysAddr. value;
    PHRADIO_LOCK pHalLock;
    LPHRADIO_ REGISTER pHalReg;
    LPHRADI0_FLAG pHalFlag;

       switch (dwloControlCode) {
         case IOCTL_HAL_RADIO_CNTRL:
           if(nInBufSize < sizeof(WORD)) {
          SetLastError(ERROR_INVALID_PARAMETER);
          break;
        }
        switch (*(LPWORD)IpInBuf) {
          case HRADIO_CMD_LOCKPAGE:
            if (nInBufSize < sizeof(HRADIO_LOCK)) {
              SetLastError(ERROR_INSUFFICIENT_BUFFER);
              break;
            }
            pHalLock = (LPHRADIO_LOCK)lpInBuf;
            if(LockPages((LPVOID)pHalLock->dwMemPtr, 1, &PhysAddr,
 2)){
              memcpy(lpOutBuf, &PhysAddr, sizeof(DWORD));
              retval = TRUE:
            }
            break;

         case HRADIO_CMD_REGISTER:
            if (nInBufSize < sizeof(HRADIO_REGISTER)) {
             SetLastError(ERROR_INSUFFICIENT_BUFFER);
             break;
            }
            pHalReg = (LPHRA DIO_REGISTER)lplnBuf;
            if (pHalReg->Device != 1 && pHaIReg->Device != 2) {
              SetLastError(ERROR_BAD_ DEVICE);
              break;
            }

            if (pHalReg->Device = 1) {
              REG32(OEM_BASE+RADIO1) = UnMapPtr(pHalReg-
 >dwMemPtr);
            } else {
                REG32(OEM_BASE+RADIO2) = UnMapPtr(pHalReg-
 >dwMemPtr);
               }

            if (!pHalReg->dwMemPtr) {
              retval = TRUE;
              break;
            }

            if (nOutBufSize < sizeof(DWORD)) {
             SetLastError(ERROR_INSUFFICIENT_BUFFER);
             break;
            }

            PhysAddr = pHalReg->Device = I? (OEM_BASE+RADIO1):
 (OEM_BASE+RADIO2);
            memcpy(IpOutBuf, &PhysAddr, sizeof(DWORD));
            retval = TRUE;
            break;

          case HRADIO_CMD_FLAG_SET:
            if (nlnBufSize < sizeof(HRADIO_FLAG)) {
              SetLastError_(ERROR_INSUFFICIENT_BUFFER);
              break;
             }
            pHalFlag = (LPHRADIO_FLAG)lplnBuf;
            switch (pHaIFlag->wFlag) {
              case HRADIO_FLAG_VIDEO_STATE:
                 VideoOff();
                 break;

              case HRADIO_FLAG_SYSTEM_BUSY:
                 // need to increment because multiple devices
                 ++REG32(OEM_BASE+RADIO_BUSY);
                 break;
             }
             retval = TRUE;
             break;

          case HRADIO _CMD_ FLAG_ CLEAR:
            if (nInBufSize < sizeof (HRADIO_FLAG)) {
              SetLastError(ERROR_INSUFFICIENT_BUFFER);
              break;
            }
            pHalFlag = (LPHRADIO_FLAG)IplnBuf;
            switch (pHalFlag->wFlag) {
              case HRADIO_FLAG_ VIDEO_STATE:
                VideoOn();
                break;

              case HRADIO_FLAG_SYSTEM_BUSY:
                // need to increment because multiple devices
                if (REG32(OEM_BASE+RADIO_BUSY)) {
                  --REG32(OEM_BASE+RADIO_BUSY);
                }
                break;
            }
            retval = TRUE;
            break;

         case HRADIO_CMD_FLAG_GET:
            if (nInBufSize < sizeof(HRADIO_FLAG)) {
              SetLastError(ERROR_INSUFFICIENT_BUFFER);
              break;
             }
             if (nOutBufSize < sizeof(DWORD)) {
               SetLastError(ERROR INSUFFICIENT_BUFFER);
               break;
             }
             pHalFlag = (LPHRADIO_FLAG)lplnBuf;
             value = 0;
             switch (pHalFlag->wFlag)
             {case HRADIO_FLAG_VIDEO_STATE:
               value = (DWORD)REG8(OEM_BASE+VIDEO_OFF);
               break;
             case HRADIO_FLAG_SYSTEM_BUSY:
               value = REG32(OEM_BASE+RADIO_BUSY);
               break;
             }
             memcpy(IpOutBuf. &value, sizeof(DWORD));
             retval = TRUE;
             break;
           }
           break;
           default:
             SetLastError(ERROR_NOT_SUPPORTED);
             break;
           }
           return retval;
         }
```

### 1.1.17.2 HAL PowerOn Implementation

```
 OEMPowerOn()
       if(WakeupSourceO=CompactFlash_Rl) {
             ret = HRADIO_CONTINUE_VIDEO_ON;
             if(RadioWakeupFunction != NULL) {
               ret = RadioWakeupFunction(HalControlBlock);
             }
             if (ret == HRADIO_CONTINUE_VIDEO_ON) {
                    Videolnit(FALSE);
             } else
             if (ret = HRADIO_CONTINUE_VIDEO_OFF){
                    Vidoelnit(TRUE);
             } else
             GotToSleep();
```

### 1.1.17.3 HAL Changes for LCD

```
 Videolnit(BOOL KeepVideoOff);
 VideoOn();
 VideoOffo;
```

### 1.1.17.4 HAL Considerations for Keyboard

```
 /* system already running *./
 if ((DWORD)REG8(OEM_BASE+VIDEO_OFF)) {
       if (IsWakeupKey(key)) {
             Video(on);
       }
       IgnoreKey();
 }
 if (IsPowerDownKey(key)) {
       if (REG32(OEM_BASE+RADIO_BUSY)) {
             VideoOff();
             IgnoreKey();
       } else ProcessKey();
 }
```

### 1.1.11.5 HAL Considerations for Touch Screen

Same logic as keyboard changes described above.

### 1.1.17.6 HAL Considerations for OEM_Idle()

```
 if VideoOff ()
       GoToSleep();
```

## Claims

1. A computer implemented method for receiving wireless information on a portable computing device (10), the method comprising:
powering a wireless receiver (27) only from a battery (37) of the portable computing device;
receiving wireless information;
storing the wireless information in memory (64) of the wireless receiver;
**characterised in that** the method further comprises:
awaking a processor (20) of the portable computing device when the wireless information fills a threshold of the memory (64) available in the wireless receiver; and
transferring the wireless information from the memory (64) of the wireless receiver to memory (22) of the portable computing device.

2. The method of claim 1 and further comprising analyzing the wireless information received from the wireless receiver (27) with the processor (20) of the portable computing device.

3. The method of claims 2 and further comprising powering another component of the portable computing device (10) as a function of the wireless information received.

4. The method of claim 3 wherein said another component comprises a display (34).

5. The method of claims 2 to 4 and further comprising powering a keyboard (32) of the portable computing device as a function of the wireless information analyzed.

6. The method of any of claims 2 to 5 wherein the step of analyzing comprises analyzing a content of the wireless information.

7. The method of any of claims 2 to 6 wherein the step of analyzing comprises analyzing a wireless address associated with the wireless information.

8. The method of claim 7 wherein the wireless address is associated with a priority status entry (161) indicating if priority messages are received thereon, and wherein the method further includes analyzing the priority status entry associated with the wireless information.

9. The method of claim 8 and further comprising powering another component of the portable computing device as a function of analyzing the priority status entry (161).

10. The method of claim 9 wherein said another component comprises a display (34).

11. The method of claim 10 and further comprising powering a keyboard (32) of the portable computing device as a function of analyzing the priority status entry.

12. The method of any of claims 8 to 11 and further comprising selectively changing the priority status entry (161) of the wireless address.

13. The method of any of claims 2 to 12 wherein the step of analyzing comprises analyzing a selected portion of the wireless information.

14. The method of any of claims 2 to 13 wherein the portable computing device (10) includes an executable application (16), and wherein the step of analyzing comprises analyzing the wireless information as a function of information from the executable application.

15. The method of any of claims 1 to 14 wherein wireless information is received in accordance with a wireless address, and wherein the wireless address includes an operational status entry (163) indicating if wireless information received thereon should be processed, and wherein storing the wireless information includes storing the wireless information in memory if the operational status entry indicates that the wireless information should be processed.

16. The method of claim 15 and further comprising selectively changing the operational status entry of the wireless address.

17. A wireless receiver (27) in combination with a portable computing device (10), the combination comprising means adapted to carry out the method steps of any of claims 1 to 16.

## Patentansprüche

1. Computerimplementiertes Verfahren zum Empfangen von Drahtlosinformation auf einer tragbaren Computervorrichtung (10), wobei das Verfahren umfasst:
Betreiben eines Drahtlosempfängers (27) nur von einer Batterie (37) der tragbaren Computervorrichtung;
Empfangen von Drahtlosinformation;
Speichern der Drahtlosinformation in einem Speicher (64) des Drahtlosempfängers;
**dadurch gekennzeichnet, dass** das Verfahren ferner umfasst:
Aufwecken eines Prozessors (20) der tragbaren Computervorrichtung, wenn die Drahtlosinformation eine Schwelle des in dem Drahtlosempfänger verfügbaren Speichers (64) füllt, und
Übertragen der Drahtlosinformation von dem Speicher (64) des Drahtlosempfängers zu einem Speicher (22) der tragbaren Computervorrichtung.

2. Verfahren nach Anspruch 1, ferner umfassend ein Analysieren der von dem Drahtlosempfänger (27) empfangenen Drahtlosinformation mit dem Prozessor (20) der tragbaren Computervorrichtung.

3. Verfahren nach Anspruch 2, ferner umfassend ein Betreiben einer weiteren Komponente der tragbaren Computervorrichtung (10) als eine Funktion der empfangenen Drahtlosinformation.

4. Verfahren nach Anspruch 3, wobei die andere Komponente eine Anzeige (34) umfasst.

5. Verfahren nach den Ansprüchen 2 bis 4, ferner umfassend ein Betreiben einer Tastatur (32) der tragbaren Computervorrichtung als eine Funktion der analysierten Drahtlosinformation.

6. Verfahren nach einem der Ansprüche 2 bis 5, wobei der Schritt des Analysierens ein Analysieren eines Inhalts der Drahtlosinformation umfasst.

7. Verfahren nach einem der Ansprüche 2 bis 6, wobei der Schritt des Analysierens ein Analysieren einer der Drahtlosinformation zugeordneten Drahtlosadresse umfasst.

8. Verfahren nach Anspruch 7, wobei der Drahtlosadresse ein Prioritätsstatuseintrag (161) zugeordnet ist, welcher anzeigt, ob Prioritätsnachrichten an dieser empfangen worden sind, und wobei das Verfahren ferner ein Analysieren des der Drahtlosinformation zugeordneten Prioritätsstatuseintrags umfasst.

9. Verfahren nach Anspruch 8, ferner umfassend ein Betreiben einer anderen Komponente der tragbaren Computervorrichtung als eine Funktion des Analysierens des Prioritätsstatuseintrags (161).

10. Verfahren nach Anspruch 9, wobei die andere Komponente eine Anzeige (34) umfasst.

11. Verfahren nach Anspruch 10, ferner umfassend ein Betreiben einer Tastatur (32) der tragbaren Computervorrichtung als eine Funktion des Analysierens des Prioritätsstatuseintrags.

12. Verfahren nach einem der Ansprüche 8 bis 11, ferner umfassend ein wahlweises Ändern des Prioritätsstatuseintrags (161) der Drahtlosadresse.

13. Verfahren nach einem der Ansprüche 2 bis 12, wobei der Schritt des Analysierens ein Analysieren eines ausgewählten Teils der Drahtlosinformation umfasst.

14. Verfahren nach einem der Ansprüche 2 bis 13, wobei die tragbare . Computervorrichtung (10) eine ausführbare Anwendung (16) umfasst und wobei der Schritt des Analysierens ein Analysieren der Drahtlosinformation als eine Funktion einer Information von der ausführbaren Anwendung umfasst.

15. Verfahren nach einem der Ansprüche 1 bis 14, wobei die Drahtlosinformation nach Maßgabe einer Drahtlosadresse empfangen wird und wobei die Drahtlosadresse einen Betriebsstatuseintrag (163) enthält, welcher anzeigt, ob an dieser empfangene Drahtlosinformation verarbeitet werden soll, und wobei ein Speichern der Drahtlosinformation ein Speichern der Drahtlosinformation im Speicher umfasst, wenn der Betriebsstatuseintrag anzeigt, dass die Drahtlosinformation verarbeitet werden soll.

16. Verfahren nach Anspruch 15, ferner umfassend ein wahlweises Ändern des Betriebsstatuseintrags der Drahtlosadresse.

17. Drahtlosempfänger (27) in Kombination mit einer tragbaren Computervorrichtung (10), wobei die Kombination Mittel umfasst, welche dafür eingerichtet sind, die Verfahrensschritte eines der Ansprüche 1 bis 16 auszuführen.

## Revendications

1. Procédé mis en oeuvre en ordinateur pour recevoir de l'information transmise par radio sur un dispositif portatif (10) de traitement de l'information, le procédé comprenant :
la mise sous tension d'un récepteur radio (27) seulement à partir d'une batterie (37) du dispositif portatif de traitement de l'information ;
la réception d'information transmise par radio ;
la mémorisation de l'information transmise par radio dans une mémoire (64) du récepteur radio ;
**caractérisé en ce que** le procédé comprend en outre:
le réveil d'un processeur (20) du dispositif portatif de traitement de l'information lorsque l'information transmise par radio atteint un seuil de la mémoire (64) disponible dans le récepteur radio ; et
le transfert de l'information transmise par radio de la mémoire (64) du récepteur radio à la mémoire (22) du dispositif portatif de traitement de l'information.

2. Procédé selon la revendication 1 et comprenant en outre l'analyse de l'information transmise par radio reçue du récepteur radio (27) à l'aide du processeur (20) du dispositif portatif de traitement de l'information.

3. Procédé selon la revendication 2 et comprenant en outre la mise sous tension d'un autre composant du dispositif (10) de traitement de l'information en fonction de l'information transmise par radio reçue.

4. Procédé selon la revendication 3, dans lequel ledit autre composant comprend un écran (34).

5. Procédé selon les revendications 2 à 4 et comprenant en outre la mise sous tension d'un clavier (32) du dispositif portatif de traitement de l'information en fonction de l'information transmise par radio analysée.

6. Procédé selon l'une quelconque des revendications 2 à 5 dans lequel l'étape d'analyse comprend l'analyse du contenu de l'information transmise par radio.

7. Procédé selon l'une quelconque des revendications 2 à 6 dans lequel l'étape d'analyse comprend l'analyse d'une adresse radio associée à l'information transmise par radio.

8. Procédé selon la revendication 7, dans lequel l'adresse radio est associée à une entrée (161) d'état prioritaire indiquant si des messages prioritaires y sont reçus, et dans lequel le procédé comprend en outre l'analyse de l'entrée d'état prioritaire associée à l'information reçue par radio.

9. Procédé selon la revendication 8 et comprenant en outre la mise sous tension d'un autre composant du dispositif portatif de traitement de l'information en fonction de l'analyse de l'entrée (161) d'état prioritaire.

10. Procédé selon la revendication 9, dans lequel ledit autre composant comprend un écran (34).

11. Procédé selon la revendication 10 et comprenant en outre la mise sous tension d'un clavier (32) du dispositif portatif de traitement de l'information en fonction de l'analyse de l'entrée d'état prioritaire.

12. Procédé selon l'une quelconque des revendications 8 à 11 et comprenant en outre le changement de façon sélective de l'entrée (161) d'état prioritaire de l'adresse radio.

13. Procédé selon l'une quelconque des revendications 2 à 12, dans lequel l'étape d'analyse comprend l'analyse d'une partie choisie de l'information reçue par radio.

14. Procédé selon l'une quelconque des revendications 2 à 13, dans lequel le dispositif portatif (10) de traitement de l'information contient une application exécutable (16), et dans lequel l'étape d'analyse comprend l'analyse de l'information reçue par radio en fonction d'une information provenant de l'application exécutable.

15. Procédé selon l'une quelconque des revendications 1 à 14, dans lequel l'information reçue par radio est reçue en fonction d'une adresse radio, et dans lequel l'adresse radio contient une entrée (163) d'état opérationnel indiquant si l'information reçue par radio qui y est reçue doit être traitée, et dans lequel la mémorisation de l'information reçue par radio comprend la mémorisation de l'information reçue par radio dans une mémoire si l'entrée d'état opérationnel indique que l'information reçue par radio doit être traitée.

16. Procédé selon la revendication 15 et comprenant en outre le changement de façon sélective de l'entrée d'état opérationnel de l'adresse radio.

17. Récepteur radio (27) en combinaison avec un dispositif portatif (10) de traitement de l'information, la combinaison comprenant des moyens aptes à effectuer les étapes de procédé selon l'une quelconque des revendications 1 à 16.
